# EUROPEAN PATENT APPLICATION

(11) **EP 4 825 280 A1**
(43) Date of publication of application: **21.10.2026**
(21) Application number: 26171425.7
(22) Date of filing: 09.04.2026
(51) Int. Cl.: A47J 31/54

(54) **SYSTEM FOR HEATING A LIQUID FOR MACHINES FOR PREPARING INFUSED BEVERAGES**

(30) Priority: 16.04.2025 IT 202500008562
(71) Applicant: Capitani S.r.l., 22043 Solbiate con Cagno (CO) (IT)
(72) Inventor: CAPITANI, Gionata, Albiolo (CO) (IT)
(74) Representative: Fabiano, Piero

(57) **Abstract**

A system for heating a liquid for machines for preparing infused beverages is described, comprising
- at least one heat exchanger (1);
- at least one inlet duct (2) to said exchanger (1), configured to feed the liquid to be heated into said exchanger (1); and
- at least one outlet duct (3) configured to drain the heated liquid from said exchanger (1);
characterized in that
said heat exchanger (1) comprises a cylindrical element (4) extending along a longitudinal axis (X-X) and is configured for defining at least one duct (5) for passing a liquid to be heated, at least one resistive tubular element (6) configured for wrapping, for at least a section of its longitudinal extent, said cylindrical element (4) and heating the liquid passing through said at least one duct (5); said cylindrical element (4) comprises two end heads placed at the longitudinal end of said cylindrical element (4);
at least one end head comprising a housing seat (11) for said at least one inlet duct (2) or said outlet duct (3);
said housing seat having at least one side window configured for allowing the insertion of at least one retainer configured for keeping the inlet (2) or outlet (3) duct inside said housing seat (11).

## Description

### Field of the invention

The present invention concerns the field of machines for making infused beverages such as coffee, tea, herbal teas, chocolate, etc., starting from a capsule or pod containing an aromatic substance.

In particular, the present invention concerns a system for heating a liquid for machines for making infused beverages.

### Known art

As is known, machines for making infused beverages generally have systems for heating a liquid, typically water, to be used for preparing the infused beverage.

Such systems typically comprise a heat exchanger.

The heat exchangers of machines for preparing infused beverages are generally made of aluminum and comprise a duct for passing water, made by molding or by removing material from the aluminum itself, and a coil functionally placed in contact with the duct to transfer heat to the latter such as to heat the liquid flow, typically water, circulating therein.

Such types of exchangers are generally bulky and made in two couplable pieces, each piece forming a half-duct.

Exchangers, in which the duct for passing the liquid to be heated is made of a steel duct that is then drowned into an aluminum box-shaped element, were suggested to prevent food contamination.

This implementation method allows, among other, to make exchangers of reduced size and is therefore preferable.

The Applicant has observed that the heat exchangers for machines for making infused beverages, of both types described above, have significant dimensions, in addition to taking a long time to bring the water circulating therein to temperature, therefore causing high energy consumption.

The Applicant has thus addressed the problem of making a system for heating a liquid for machines for preparing infused beverages which reduces the size of the exchanger inside the machine and, above all, the time for bringing the water circulating therein to temperature, thereby optimizing energy consumption.

Moreover, the Applicant has observed that both types of heat exchangers described above currently have inlet and outlet ducts of the liquid to be heated, which are formed by tubular lengths extending from the box-shaped body.

The plastic or rubber tubes of the hydraulic circuit of the machine are mounted on the latter by mechanical interference.

The Applicant has however noted that the latter connection or type of couplings between the plastic or rubber tubes and the tubular inlet/outlet sections of the exchangers do not seem optimal. The plastic or rubber tubes actually wear over time, therefore generating leakages right at the connection or coupling.

The Applicant has therefore addressed the problem of making a system for heating a liquid for machines for preparing infused beverages which improves the coupling between the ducts at the inlets/outlets of the exchanger.

### Summary of the invention

In a first aspect, the invention therefore concerns a system for heating a liquid for machines for preparing infused beverages, comprising
- at least one heat exchanger;
- at least one inlet duct to said exchanger, configured to feed the liquid to be heated into said exchanger; and
- at least one outlet duct configured to drain the heated liquid from said exchanger;
characterized in that
said heat exchanger comprises a cylindrical element extending along a longitudinal axis and is configured for defining at least one duct for passing a liquid to be heated, at least one resistive tubular element configured for wrapping, for at least a section of its longitudinal extent, said cylindrical element and heating the liquid passing through said at least one duct; said cylindrical element comprises two end heads placed at the longitudinal end of said cylindrical element;
at least one end head comprising a housing seat for said at least one inlet duct or said outlet duct;
said housing seat having at least one side window configured for allowing the insertion of at least one retainer configured for keeping the inlet or outlet duct inside said housing seat.

In the aforesaid aspect, the present invention can have at least one of the preferred characteristics described hereunder.

Each end head preferably comprises a housing seat for the at least one aforesaid inlet duct or aforesaid outlet duct, said housing seat extending along the longitudinal axis.

Each housing seat conveniently has an enlarged portion provided with a radial dimension such as to house an end of an inlet or outlet duct and at least one ring-shaped sealing element fit on the inlet or outlet duct.

The retainer element preferably comprises a portion configured for being slipped on the inlet or outlet duct and locking it into the housing seat.

At least two ring-shaped sealing elements, fit on the end of the inlet and outlet ducts so as to prevent liquid from escaping from said heat exchanger, are conveniently present, the aforesaid at least two ring-shaped sealing elements are fit in series.

The cylindrical element preferably comprises at least one first abutment element configured for abutting against the resistive tubular element, when the latter is fit on the cylindrical element so as to prevent their mutual sliding.

The heat exchanger advantageously comprises at least one second abutment element configured for abutting against the resistive tubular element when the latter is fit on the cylindrical element, so as to prevent the resistive tubular element from sliding with respect to the cylindrical element.

The clamp-shaped element preferably comprises two portions configured for being coupled so as to enclose said cylindrical element and define a second abutment element for said resistive tubular element.

The cylindrical element conveniently comprises a longitudinal stiffening rib configured and arranged for avoiding deforming side walls of the passage channel.

Further characteristics and advantages of the invention will become clearer in the detailed description of some preferred, but not exclusive, embodiments of a heat exchanger, in particular for machines for preparing an infused beverage according to the present invention.

### Brief description of the drawings

That description will be set forth hereunder with reference to the accompanying drawings provided by way of example only and therefore not limiting, in which:
- figure 1 shows a heat exchanger according to the present invention, taken from a machine for making infused beverages;
- figure 2 shows a heating system according to the present invention, in section and partially exploded view;
- figure 3 shows a heating system, in a partially sectional and exploded perspective; and
- figure 4 shows a second embodiment of the heating system according to the present invention.

### Detailed description of embodiments of the invention

With reference to the figures, a heating system, in particular for machines for preparing infused beverages, for example by means of a capsule containing an aromatic substance, according to the present invention, is denoted by the numerical reference 10.

The heating system 10 comprises a heat exchanger 1, an inlet duct 2 configured to feed a liquid, preferably water, into the heat exchanger 1, and an outlet duct 3 configured for the outflow of the heated liquid, preferably water, from the exchanger 1.

The inlet 2 and outlet 3 ducts are ducts known to the technician of the field, preferably made of silicone or polymer material, such as for example Teflon, resistant to high pressure.

The heat exchanger 1 comprises a first cylindrical element 4 that extends along a longitudinal X-X axis and is configured to define at least one channel 5 for the passage of a liquid to be heated and at least one resistive tubular element 6 configured to be fit over the cylindrical element 5.

The resistive tubular element 6 is configured for being fit and wrapping, for at least one section of its longitudinal extent, i.e. along the longitudinal axis X-X, the cylindrical element 4, so as to heat the liquid passing in the radially adjacent channel 5.

The resistive tubular element 6 wraps the cylindrical element 5 for at least 50% of its longitudinal extent. The resistive tubular element 6 preferably wraps the cylindrical element 4 for at least 70% of its longitudinal extent.

The resistive tubular element 6 is made of thermally conductive material, such as steel for example, and comprises a resistive circuit integrated or printed thereon.

The cylindrical element 4 therefore comprises a channel 5 for passing the liquid to be heated, formed at the outer side surface 7 of the cylindrical element 4 and extending in a curvilinear, preferably helical pattern along the longitudinal axis X-X.

In the embodiment shown, the channel 5 has side walls 8 of helical pattern about the longitudinal axis X-X.

The cylindrical element 4 preferably has longitudinal stiffening ribs 9 to stiffen the side walls 8 of the channel 5 and avoid deforming them under the pressure of the circulating liquid.

The longitudinal ribs 9 are arranged radially outside the duct 5.

In an embodiment not shown, the longitudinal ribs are circumferentially joined to form a stiffening ring-shaped element arranged radially outside the channel 5.

The cylindrical element 4 comprises two end heads 15, 16 placed at the longitudinal end of the cylindrical element.

According to an important aspect of the present invention, at least one end head 15, 16, preferably both, comprise a housing seat 11 for the inlet duct 2 or outlet duct 3.

The housing seat 11 for the inlet duct 2 or outlet duct 3 extends along the longitudinal axis X-X and has an enlarged portion 12a followed by a narrow portion.

The enlarged portion 12a has a radial dimension such as to house an end of an inlet or outlet duct and at least one ring-shaped sealing element 13 fit on the inlet or outlet duct. The ring-shaped sealing element 13 is generally made of an elastomer material.

Two ring-shaped sealing elements 13 are preferably present and fit on the end of the inlet and outlet ducts, so as to prevent liquid from escaping from the heat exchanger 1.

The two ring-shaped sealing elements 13 being fit in series.

The enlarged portion 12b is positioned axially further away from the opening on the outside of the housing seat 11 and has a radial dimension such as to house only one end of an inlet or outlet duct.

Each housing seat 11 has at least one side window 19 configured for allowing the insertion of at least one retainer 20 configured for keeping the inlet 2 or outlet 3 duct inside the housing seat 11.

In the embodiment shown in the figures, the retainer 20 is made with a hairpin element 21, preferably of metal material.

The retainer 20 comprises a portion 22 configured for being slipped on the inlet 2 or outlet duct 3 and wrapping it, and at least one, preferably two, abutment portion(s) 23 for locking it into the housing seat 11.

In the embodiment, the portion 22 is formed by a specific profile of the prongs 24 of the hairpin element 21, whereas the abutment portion 23 is represented by the joining section of the two prongs 24 of the hairpin element 21.

When the retainer 20 is fit on the inlet or outlet duct, the abutment portion 23 abuts against the walls of the side window 19, preventing the axial sliding of the inlet or outlet duct with respect to the housing seat.

The end portion of each prong can represent a second abutment element adapted for abutting against the walls of a further side window 19', preventing the axial sliding of the inlet or outlet duct with respect to the housing seat.

At least one first abutment element 14, configured for abutting against the resistive tubular element 6 when the latter is fit on the cylindrical element 4, so as to prevent their mutual sliding, is further present.

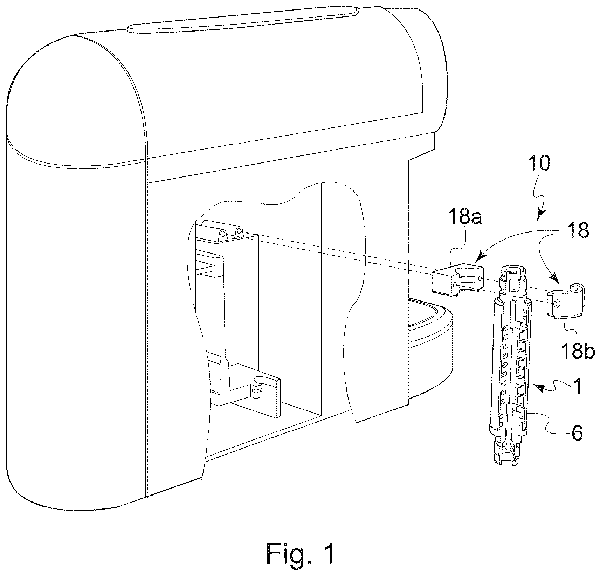

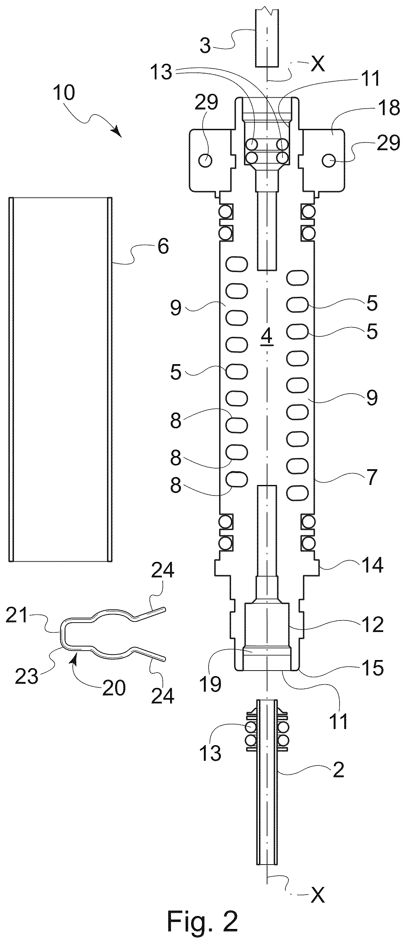

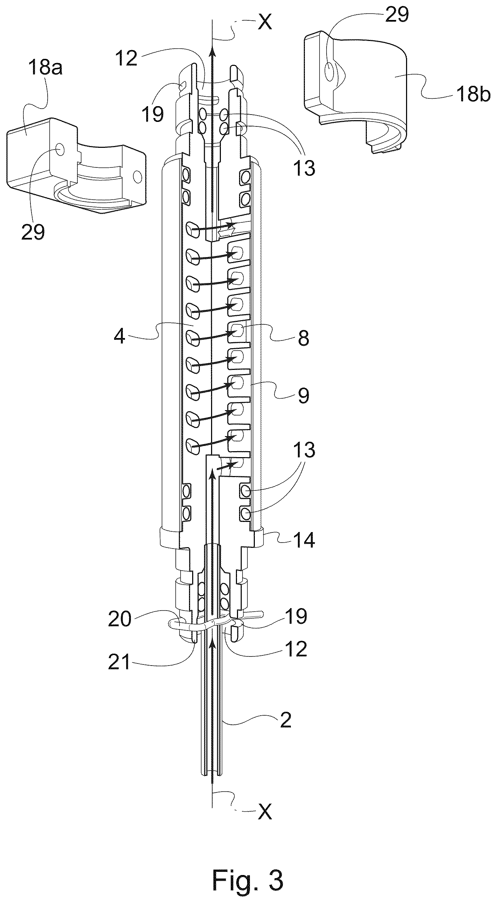

According to a first embodiment shown in figures 1-3, the first abutment element 14 is integral with the cylindrical element 4 and extends radially from its outer side surface 7.

In particular, the abutment element 14 is like a continuous ring-shaped element extending radially from the outer side surface 7 of the cylindrical element 4.

The abutment element 14 preferably extends radially from the outer side surface 7 of the cylindrical element 4 by at most 1.5 cm, even more preferably by 0.75.

The first abutment element 14 is made in proximity to an end head 15 of the cylindrical element, but sufficiently spaced therefrom.

By way of example, the first abutment element 14 can be made along the longitudinal axis X-X at a distance greater than or equal to 1 cm from the end head 15.

The first abutment element 14 is preferably made in proximity to the end head 15 which has the seat 11 for accommodating the inlet duct 2 of the water to be heated, i.e. being fed into the exchanger 1.

According to a further embodiment, the first abutment element 14 is an elastic retaining ring 27, preferably an elastic steel retaining ring.

In this case, the abutment element 14 is fit directly on the cylindrical element 4 and abuts against the resistive tubular element 6, preventing it to slide in the longitudinal direction.

For this purpose, the cylindrical element 4 can provide a circumferential groove 28 configured for housing, at least partially, the first abutment element 14.

The exchanger 1 further comprises at least one second abutment element 18 also configured for preventing the resistive tubular element 6 from sliding with respect to the cylindrical element 4.

The second abutment element 18 is arranged at the end of the cylindrical element 4 opposite the one having the first abutment element 14.

According to a first embodiment, the second abutment element is made of a clamp-like element 18 configured for being coupled to the cylindrical element 4.

In the embodiment shown in figures 1-3, the clamp-like element 18 is made of two portions 18a; 18b configured for being coupled so as to enclose the cylindrical element and define a second abutment element for the resistive tubular element 6 extending radially from the cylindrical element 4.

The two portions 18a; 18b are provided with special corresponding seats 29, into which retaining screws are inserted, for being coupled together.

It is further possible to fasten the clamp-like element 18, and consequently the exchanger 1, inside the machine for preparing an infused beverage through the corresponding seats and retaining screws.

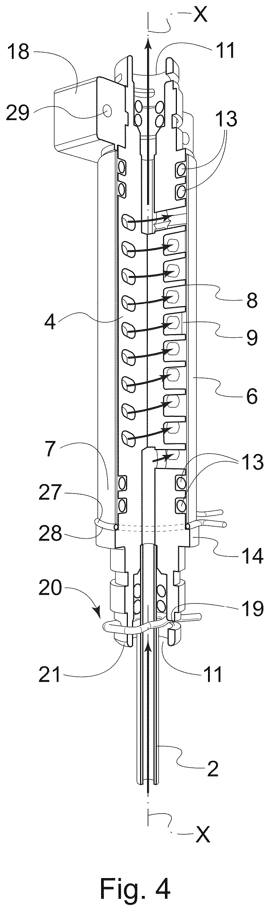

According to an embodiment shown in figure 4, the second abutment element 18 is integral with the cylindrical element 4 and extends radially from its outer side surface 7.

The second abutment element 18 can have a portion with special seats 29 into which retaining screws are inserted.

It is further possible to fasten the abutment element 18, and consequently the exchanger 1, inside the machine for preparing an infused beverage through the corresponding seats and retaining screws. Several modifications can be made to the embodiments described in detail, all anyhow remaining within the protection scope of the invention, as defined by the following claims.

## Claims

1. System for heating a liquid for machines for preparing infused beverages, comprising
- at least one heat exchanger (1);
- at least one inlet duct (2) to said exchanger (1), configured to feed the liquid to be heated into said exchanger (1); and
- at least one outlet duct (3) configured to drain the heated liquid from said exchanger (1);
**characterized in that**
said heat exchanger (1) comprises a cylindrical element (4) extending along a longitudinal axis (X-X) and is configured for defining at least one duct (5) for passing a liquid to be heated, at least one resistive tubular element (6) configured for wrapping, for at least a section of its longitudinal extent, said cylindrical element (4) and heating the liquid passing through said at least one duct (5); said cylindrical element (4) comprises two end heads (15,16) placed at the longitudinal end of said cylindrical element (4);
at least one end head (15,16) comprising a housing seat (11) for said at least one inlet duct (2) or said outlet duct (3);
said housing seat (11) having at least one side window (19) configured for allowing the insertion of at least one retainer configured for keeping the inlet (2) or outlet (3) duct inside said housing seat (11).

2. System for heating a liquid according to claim 1, **characterized in that** each head end comprises a housing seat (11) for said at least one inlet duct (2) or said outlet duct (3) extending along the longitudinal axis X-X.

3. System for heating a liquid according to claim 1 or 2, **characterized in that** each housing seat (11) has an enlarged portion (12) provided with a radial dimension such as to house an end of an inlet or outlet duct and at least one ring-shaped sealing element (13) fit on said inlet or outlet duct.

4. System for heating a liquid according to any one of preceding claims 1 to 3, **characterized in that** said retainer element (20) comprises a portion configured for being slipped on said inlet or outlet duct and locking it into said housing seat (11).

5. System for heating a liquid according to claim 3 or 4, **characterized by** comprising at least two ring-shaped sealing elements (13) fit on the end of the inlet and outlet ducts so as to prevent liquid from escaping from said heat exchanger (1), said at least two ring-shaped sealing elements (13) being fit in series.

6. System for heating a liquid according to any one of preceding claims 1 to 5, **characterized by** comprising at least one first abutment element (1) configured for abutting against said resistive tubular element (6) when the latter is fit on said cylindrical element (4), so as to prevent their mutual sliding.

7. System for heating a liquid according to claim 6, **characterized by** comprising at least one second abutment element configured for abutting against said resistive tubular element (6) when the latter is fit on said cylindrical element (4), so as to prevent their mutual sliding.

8. System for heating a liquid according to claim 7, **characterized in that** said first abutment element (18) comprises two portions (18a;18b) configured for being coupled to one another, so as to enclose said cylindrical element and define a second abutment element for said resistive tubular element (6).

9. System for heating a liquid according to claim 1, **characterized in that** said channel (5) for passing the liquid to be heated is formed at an outer side surface (7) of the cylindrical element (4) and extends in a curvilinear pattern, along the longitudinal axis X-X.

10. System for heating a liquid according to claim **1, characterized in that** said cylindrical element comprises a longitudinal stiffening rib (9) configured and arranged for avoiding deforming side walls (8) of the duct (5) for passing a liquid to be heated.
